# EUROPEAN PATENT SPECIFICATION

(11) **EP 0 539 244 B1**
(45) Date of publication and mention of the grant of the patent: **06.03.1996**
(21) Application number: 92402463.1
(22) Date of filing: 09.09.1992
(51) Int. Cl.: F24J 1/00, F24J 2/00

(54) **Method of supplying energy through medium of methanol**
Energieversorgungsverfahren mit Hilfe von Methanol als Medium
Procédé d'alimentation en énergie en utilisant comme posteur le méthanol

(30) Priority: 10.09.1991 JP 230066/91
(43) Date of publication of application: 28.04.1993
(73) Proprietor: MITSUBISHI JUKOGYO KABUSHIKI KAISHA, Tokyo (JP)
(72) Inventor: Kobayashi, Fujio, c/o Mitsubishi Jukogyo K. K., Tokyo (JP); Ikuta, Yoshiaki, c/o Mitsubishi Jukogyo K. K., Tokyo (JP)
(74) Representative: Rodhain, Claude

(56) References cited:
- EP-A- 0 413 199
- DE-A- 2 425 939
- DE-A- 2 447 913
- US-A- 5 001 902
- Patent Abstracts of Japan JP 57 167 935
- VGB Kraftwerkstechnik 71 (1991) August, No. 8, pages 759-764

## Description

The present invention relates to a method for transporting and/or storing energy through the medium of methanol, which theoretically involves no energy attenuation during transmission or storage and is applicable, above all, to long-distance transmission or longterm storage of energy.

As is commonly known, the energy that the human being consumes today is mostly derived from fossil fuels such as petroleum.

However, petroleum that makes up a large percentage of fossil fuel supply is limited in reserve.

In addition, various exhaust and other emissions resulting from the use of fossil fuels have increasingly impaired the global environment and life on the earth including the humans. It has been warned that even though the fossil energy reserves do not pose a problem, irreparable environmental disruption will result if things are left as they are.

In recent years, among the exhaust emissions, carbon dioxide has become largely responsible for the phenomenon of global warming since far more carbon dioxide is being produced than is recovered by nature. There is a strong demand, therefore, for the reduction of its overall production.

Investigations have thus far been made on the replacement of fossil fuels by other energy sources. Utilization of powers such as of solar heat, winds, waves, temperature difference between surface and deep-sea waters, and also of geothermal and nuclear powers has been studied and partly carried into practice.

Harnessing the energies from these sources for industrial and other uses, however, requires large-scale installations exclusively designed for the particular purposes. The sites where such exclusive installations can be built are restricted to specific locations, usually remote from the energy-consuming urban areas.

If energy were transmitted from the site of such an exclusive installation all the way to a consuming area, as converted to electric energy as is customary in the art, the cost of transmission facilities and the energy loss involved would be quite enormous.

Transmission of energy in the form of light or heat is out of question because the energy would diminish before being transferred a distance of only several kilometers.

Assuming that a solar heat power plant was built somewhere in a vast desert or highland, e.g., the Sahara, Arabian, or Australian desert, or the Tibet highland, it would be practically impossible in Japan to utilize the electric energy from that plant. Wherever located, the plant would be tens of thousands of kilometers away from this country, and the transmission line from the plant would have to cross an ocean or oceans.

In municipal and suburban areas electricity is available readily and relatively inexpensively at a late-night discount. Nevertheless, the recipients of the service are limited, and more effective utilization of the midnight power supply is desired.

In the European patent application EP-A-0 413 199 is disclosed a method for reducing the amount of carbon dioxide released from a power generating plant. In this document, methanol is synthesized from recovered carbon dioxide and hydrogen obtained from the decomposition of water, and the synthesized methanol is separated from water and burned to give energy.

In the publication VGB Kraftwerkstechnik, 71 (1991) August, n° 8 is described the decomposition of methanol into carbon di- or mon- oxide and hydrogen in power plants.

### OBJECT AND SUMMARY OF THE INVENTION

The present invention has been made in view of the afore-described circumstances surrounding energy supply. It is an object of the present invention to supply energies that are inexhaustibly obtained in certain regions or by installations as, for example, solar heat, wind, wave, seawater temperature differential, geothermal, and nuclear powers, and also the electric power available at low prices in the depth of night, efficiently and as desired to energy-consuming areas or during heavy demand periods.

Another object is to maintain the material balance involved within a practically closed system so as to avoid an increase in the carbon dioxide content of the atmosphere that has deleterious effects upon the global environment.

For the purposes of describing the invention any of the energies obtained in the certain regions or during specific periods is called "given energy".

Thus, the invention provides a method for transporting and/or storing energy through the medium of methanol which is used as energy transportation and storage means, with the material balance maintained within a practically closed system to avoid unfavorable effects, e.g., upon the environment, which method comprises the steps of: water decomposition in which water is decomposed into hydrogen and oxygen by a surplus electric energy obtained from a given energy source; methanol synthesis in which methanol is synthesized from carbon dioxide recovered in a subsequent carbon dioxide recovery step and from the hydrogen obtained in the water decomposition step and then the synthesized methanol is separated from water produced during said step of synthesizing methanol ; methanol combustion in which the methanol that has been synthesized in the methanol synthesis step is burned to produce available energy, wherein the carbon dioxide produced at said step of burning methanol is recovered and the thus recovered carbon dioxide is stoped and/or transported for use at said step of synthesizing methanol. The carbon dioxide recovery in which carbon dioxide and water that have resulted from the methanol combustion step are separately recovered.

According to this method of energy supply, given energy is converted to electric energy and used in electrolyzing water to produce hydrogen, and the resulting hydrogen is combined with carbon dioxide that has been recovered in a carbon dioxide recovery step to synthesize methanol, with concomitantly produced thermal energy being recovered when necessary.

The synthesized methanol, a chemical substance that theoretically undergoes no energy attenuation and is a liquid convenient for transportation and storage, is shipped to an energy-consuming area or stored for a given period of time and then burned in the methanol combustion step for the recovery of its energy.

The carbon dioxide that has resulted from the combustion is recovered in the carbon dioxide recovery step and utilized in the synthesis of methanol as described above.

The water produced by the synthesis and burning of methanol is recycled to the electrolysis step for water decomposition.

Even if the water is drained off instead of being reused for electrolysis, it would be possible to supply water separately from somewhere else, e.g., the region where the given energy is available, and the system would practically remain closed.

The same is true of the carbon dioxide that results from the combustion of methanol and that which is used in the synthesis of methanol. They can be likewise procured from the region where the given energy is available. The energy supply method of the invention, therefore, can be carried in practice within a practically closed system, excluding the use and recovery of the given energy that are performed separately, without causing an increase in the overall carbon dioxide concentration in the atmosphere.

The invention further provides a method for transporting and/or storing energy through the medium of methanol which comprises the steps defined in claim 5.

In accordance with this energy supply method, given energy is converted to electric energy for use in electrolysis of water to give hydrogen, and carbon dioxide recovered by combustion of carbon monoxide, hydrogen obtained by decomposition of water, and hydrogen obtained by decomposition of methanol are combined to synthesize methanol, the thermal energy generated then being recovered when necessary.

The synthesized methanol is decomposed in the methanol decomposition step into carbon monoxide and hydrogen using the given energy, and the carbon monoxide is combusted to recover its energy.

The combustion also produces carbon dioxide, which is recovered and is used along with hydrogen for the synthesis of methanol. This energy supply method is performed like the first method in a practically closed system.

The energy supply method of the invention utilizes energy sources abundantly available in specific regions, such as solar heat, wind, wave, and seawater temperature differential, geothermal, and nuclear powers, and also the electric power available at low prices in the depth of night even in urban and suburban areas. The method uses such energy in electrolysis of water and synthesis of methanol. Consequently, the energy is converted to methanol, hydrogen, or other form which theoretically undergoes no attenuation, and long-distance transportation and storage without energy loss is realized. The synthesized methanol is burned or is decomposed while carbon monoxide is burned and the resulting thermal energy is recovered for use in industrial and other activities in an energy-consuming area or during an energy-consuming period.

In this way inexhaustible energy resources remote from the consuming areas can be effectively exploited. In the neighboring regions surrounding the consuming centers any surplus of electric energy is stored and is released when the system load becomes heavy. These features offer advantages including levelling of the operation of different power plants involved.

Moreover, because the process operates practically in a closed system except for the use and recovery of the energy, it can cause no such global environmental disruption as do the conventional methods that depend on fossil fuels for energy supply.

### BRIEF DESCRIPTION OF THE DRAWINGS

Fig. 1 is a schematic diagram illustrating a working example (Example 1) of the present invention; and
Fig. 2 is a schematic diagram illustrating another example (Example 2) of the invention.

### DETAILED DESCRIPTION OF PREFERRED EMBODIMENTS

### (Example 1)

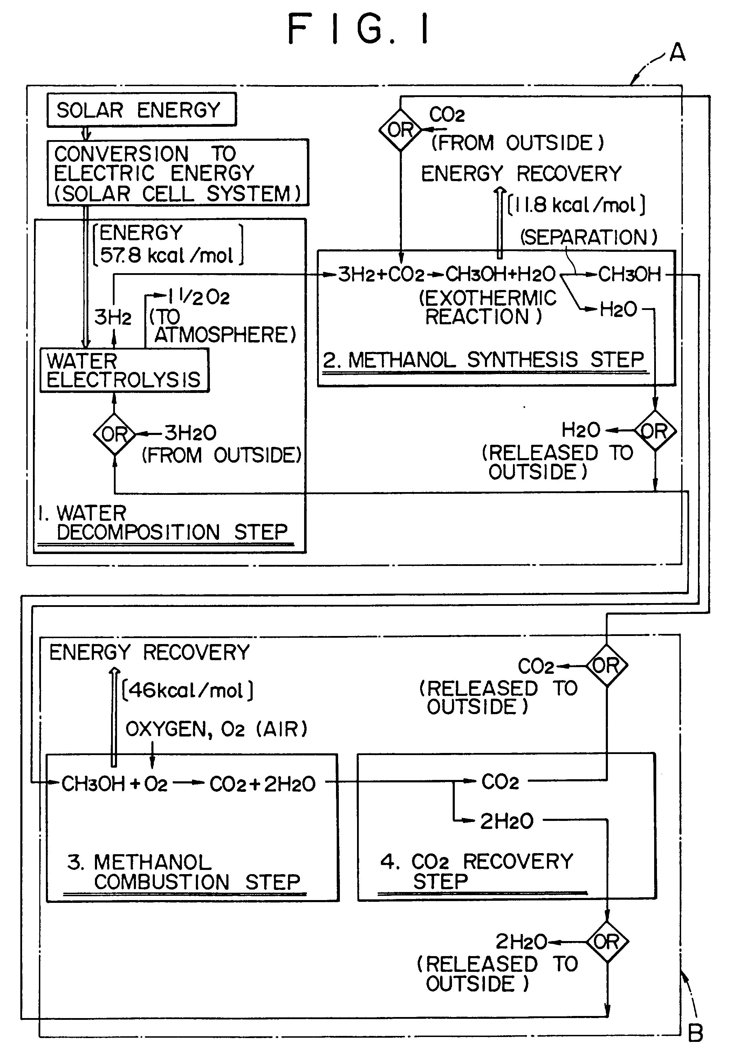

An example of the invention will now be described with reference to Fig. 1. A section A represents a region with abundant energy supply, in this case an African desert region prolific in solar energy and having a large enough land to set up installations for energy conversion such as solar cell arrays.

Another section B represents an energy-consuming region, e.g., Japan.

In the section A solar energy is converted by a solar cell system to electric energy, which in turn is supplied to a water decomposition step 1. The quantity of energy used in the step, e.g., is 57.8 kcal/mol.

The water decomposition step I gives oxygen (1½O2), which is released to the atmosphere, and hydrogen (3H₂), which is used, together with carbon dioxide to be mentioned later, in a methanol synthesis step 2.

The reaction formula of the methanol synthesis is 3H₂+CO₂ → CH₃OH+H₂O. This reaction is exothermic and produces 11.8 kcal/mol of energy, which is recovered.

Methanol synthesized in the methanol synthesis step and water as a by-product are separated. Water is either discharged from the system or is recycled to the above-mentioned water electrolysis step 1.

The synthesized methanol from the synthesis step 2 is transported to the section B, where it is burned in a methanol combustion step 3. Here the reaction formula is CH₃OH+O₂ → CO₂+2H₂O. The thermal energy thus generated is recovered, at the rate of 46 kcal/mol. This energy is consumed in industrial and other applications.

Thus, the energy used for the electrolysis of water is almost completely recovered in the steps of methanol synthesis and combustion, and the recovered energy is utilized for various purposes.

The carbon dioxide and water that have resulted from the combustion of methanol are separated by a carbon dioxide recovery step 4, and water is discharged from the system. Even when both water and carbon dioxide are released to the atmosphere, they are eventually recovered from nature and elsewhere separately for reuse, in what may practically be called a closed system.

It is further possible to transport the hydrogen obtained in the water decomposition step 1 to the section B, carry out the methanol synthesis step 2 in the same section, recover the resulting thermal energy, and utilize it, together with the energy that the methanol combustion step 3 yields, in industrial and other activities.

### (Example 2)

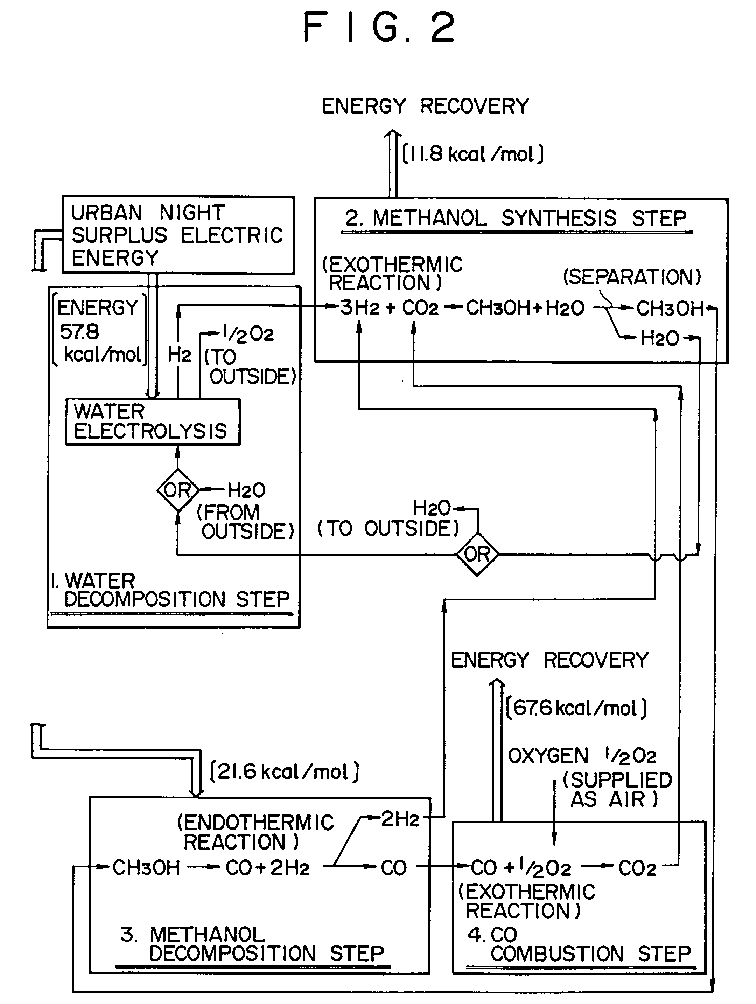

Another example of the invention will be described below in conjunction with Fig. 2.

In this example the late-night power supply that is obtainable easily and relatively inexpensively in municipal and suburban areas is used as the energy source for the water decomposition step 1.

The oxygen (½O₂) that has resulted from the water decomposition step 1 is released to the atmosphere, while the hydrogen (H₂) from the same step is temporarily kept in storage. The latter is used, during the high demand period such as daytime when the energy consumption is large, for the methanol synthesis, along with the carbon dioxide to be described later, in the methanol synthesis step 2. The thermal energy produced by the methanol synthesis is recovered and allotted to industrial and other applications.

The methanol that has been synthesized in the methanol synthesis step 2 and the water produced secondarily are then separated. The water is discharged from the system or is recycled to the water electrolysis step 1. The methanol is sent to the methanol decomposition step 3, where it is separated into carbon monoxide and hydrogen by use of the energy derived from the late-night power. The reaction that takes place in the step 3 is endothermic. The hydrogen thus obtained is transferred to the methanol synthesis step 2 for use in the synthesis of methanol.

The carbon monoxide is once stored and, when energy consumption increases due to heavy power demand, e.g., in the daytime, it is pumped out and burned to yield adequate thermal energy, which is recovered for use in industrial and other activities. The carbon dioxide that has resulted from the combustion of carbon monoxide is used in methanol synthesis in the methanol synthesis step 2.

The energy balances In the two examples thus far described are given in Figs. 1 and 2.

## Claims

1. A method for transporting and/or storing energy using methanol as a medium for energy transportation and storage, which method comprises the steps of: decomposing water into hydrogen and oxygen by a surplus electric energy obtained from an energy source; synthesizing methanol from carbon dioxide and said hydrogen having been obtained by decomposing water; separating the synthesized methanol from water produced during said step of synthesizing methanol ; storing and/or transporting the thus obtained methanol; and burning the methanol that has been synthesized at said step of synthesizing methanol to obtain energy, wherein the carbon dioxide produced at said step of burning methanol is recovered, and the thus recovered carbon dioxide is stored and/or transported for use at said step of synthesizing methanol.

2. The method according to claim 1, wherein water produced at said step of burning methanol is recovered, and the thus recovered water is stored and/or transported for use at said step of decomposing water for methanol synthesis.

3. The method according to claim 1 or 2, wherein the energy source is solar energy, wind, wave, temperature differential between surface and deep-sea water, or geothermal or nuclear power.

4. The method according to any one of claims 1 to 3, wherein the carbon dioxide produced in the methanol combustion step is recovered and reused in the method, thereby the method is conducted without causing an increase in overall carbon dioxide concentration in the atmosphere.

5. A method for transporting and/or storing energy using methanol as a medium for energy transportation and storage, which method comprises the steps of: decomposing water into hydrogen and oxygen by electric energy obtained from an energy source; synthesizing methanol from carbon dioxide and said hydrogen having been obtained by decomposing water as well as hydrogen resulting from a subsequent step of decomposing methanol; separating the synthesized methanol from water produced during said step of synthesizing methanol ; storing and/or transporting the thus obtained methanol; decomposing said methanol into carbon monoxide and hydrogen; separately recovering said carbon monoxide and said hydrogen produced by decomposing said methanol; burning said carbon monoxide to obtain energy; and recovering carbon dioxide produced at said step of burning carbon monoxide; wherein the carbon dioxide recovered at said step of recovering carbon dioxide produced by decomposing methanol and said hydrogen produced by decomposing methanol are used at said step of synthesizing methanol.

6. The method according to claim 5, wherein said hydrogen produced by said decomposition of water or by said decomposition of methanol is stored, and said methanol synthesis is carried out when demand for energy is high so that heat generated by said methanol synthesis is utilized as an energy source.

7. The method according to claim 5, wherein said carbon monoxide produced at said step of decomposing methanol is stored, and said carbon monoxide is burned when demand for energy is high so that heat generated by burning said carbon monoxide is utilized as an energy source.

8. The method according to claim 5 to 7, wherein the water produced at said step of burning carbon monoxide is recovered, and the thus recovered water is stored and/or transported for use at said step of synthesizing methanol.

9. The method according to any one of claims 5 to 8, wherein the energy source is nuclear power.

10. The method according to any one of claims 5 to 9, wherein the carbon dioxide produced in said step of burning carbon monoxide is recovered and reused in the method, thereby the method is conducted without causing an increase in overall carbon dioxide concentration in the atmosphere.

## Patentansprüche

1. Verfahren für die Lieferung und/oder Speicherung von Energie unter Verwendung von Methanol als Mittel für die Zuführung und Speicherung der Energie, wobei dieses Verfahren die folgenden Verfahrensschritte einschließt: Zerlegung von Wasser in Wasserstoff und Sauerstoff mittels eines aus einer Energiequelle erzielbaren Energieüberschusses; synthetische Herstellung von Methanol aus Kohlendioxid und dem Wasserstoff, der bei der Zerlegung von Wasser erhalten worden ist; Separieren des synthetisch hergestellten Methanols von dem Wasser, das während des Verfahrensschrittes der synthetischen Herstellung des Methanols erzeugt wurde; Speicherung und/oder Lieferung des so gewonnenen Methanols; Verbrennen des Methanols, das während des Verfahrensschrittes der synthetischen Methanolherstellung zur Energieerzeugung gewonnen wurde, wobei Kohlendioxid, das während der Methanolverbrennung entsteht, wiedergewonnen wird und dieses dabei so gewonnene Kohlendioxid gespeichert und/oder für die Verwendung während des Verfahrensschrittes der synthetischen Gewinnung von Methanol bereitgestellt wird.

2. Verfahren nach Anspruch 1, wobei Wasser, das während des Verfahrensschrittes des Verbrennens von Methanol anfällt, gewonnen und gespeichert wird und/oder zur Verwendung während des Verfahrensschrittes des Zerlegens von Wasser für die synthetische Methanolherstellung bereitgestellt wird.

3. Verfahren nach Anspruch 1 oder Anspruch 2, bei dem die benötigte Energie als Solarenergie, Wind- oder Wellenenergie, durch Nutzen der Temperaturdifferenz zwischen Oberflächen- und Tiefseewasser gewonnene Energie, geothermische Energie oder als Nuklearenergie zur Verfügung gestellt wird.

4. Verfahren nach einem der Ansprüche 1 bis 3, bei dem das Kohlendioxid, das während des Verfahrensschrittes der Methanolverbrennung anfällt, gewonnen und bei dem Verfahren wiederverwendet wird, wobei das Verfahren derart durchgeführt wird, daß keine Erhöhung der Kohlendioxidkonzentration in der Atmosphäre eintritt.

5. Verfahren für die Lieferung und/oder Speicherung von Energie unter Verwendung von Methanol als Mittel für die Lieferung und Speicherung von Energie, wobei dieses Verfahren folgende Verfahrensschritte einschließt: Zerlegung von Wasser in Wasserstoff und Sauerstoff unter Verwendung der von einer Energiequelle bereitgestellten elektrischen Energie; synthetische Herstellung von Methanol aus Kohlendioxid und dem Wasserstoff, der bei der Zerlegung des Wassers erhalten wurde und des Wasserstoffes, der bei einem nachfolgenden Schritt des Zerlegens von Methanol erhalten wird; Trennen des synthetisch gewonnenen Methanols von Wasser, das während des Verfahrensschrittes der synthetischen Gewinnung von Methanol gewonnen wurde; Speicherung und/oder Lieferung des so erhaltenen Methanols; Zerlegen des Methanols in Kohlenmonoxid und Wasserstoff; eigenständiges Gewinnen dieses Kohlenmonoxids und dieses Wasserstoffs, wie beide bei der Zerlegung des Methanols entstanden sind; Verbrennen des Kohlenmonoxids zur Gewinnung von Energie; Gewinnung des Kohlendioxids, das beim Verfahrensschritt des Verbrennens von Kohlenmonoxid entstanden ist, wobei das Kohlendioxid, das beim Verfahrensschritt zur Gewinnung von Kohlendioxid, das beim Zerlegen von Methanol gewonnen wurde und der Wasserstoff, der beim Zerlegen von Methanol gewonnen wurde, beim Verfahrensschritt der synthetischen Herstellung von Methanol verwendet werden.

6. Verfahren nach Anspruch 5, bei dem der Wasserstoff, der beim Zerlegen des Wassers gewonnen wurde oder der beim Zerlegen von Methanol gewonnen wurde, gespeichert wird und die synthetische Methanolherstellung durchgeführt wird, wenn der Energiebedarf höher ist, so daß die Wärme, die bei der synthetischen Methanolherstellung entsteht, als Energiequelle verwendet wird.

7. Verfahren nach Anspruch 5, bei dem das Kohlenmonoxid, das beim Verfahrensschritt der Zerlegung von Methanol entstanden ist, gespeichert wird und das Kohlenmonoxid verbrannt wird, wenn der Energiebedarf hoch ist, so daß die Wärme, die beim Verbrennen von Kohlenmonoxid entstanden ist, als Energiequelle verwendet wird.

8. Verfahren nach den Ansprüchen 5 bis 7, bei dem das Wasser, das beim Verfahrensschritt des Verbrennens von Kohlenmonoxid angefallen ist, gewonnen wird und das so gewonnene Wasser gespeichert und/oder zur Verwendung beim Verfahrensschritt der synthetischen Gewinnung von Methanol geliefert wird.

9. Verfahren nach einem der Ansprüche 5 bis 8, bei dem die Energie Nuklearenergie ist.

10. Verfahren nach einem der Ansprüche 5 bis 9, bei dem das Kohlendioxid, das beim Verfahrensschritt des Verbrennens des Kohlenmonoxids entsteht, gewonnen und beim Verfahren wiederverwendet wird, wobei das Verfahren ohne Erhöhung der Gesamtkonzentration am Kohlendioxid in der Atmosphäre durchgeführt wird.

## Revendications

1. Procédé pour transporter et/ou stocker de l'énergie en utilisant du méthanol, en tant que milieu destiné au transport et au stockage de l'énergie, le procédé comportant les étapes consistant à: décomposer de l'eau en hydrogène et en oxygène en utilisant un surplus d'énergie électrique obtenu à partir d'une source d'énergie, synthétiser du méthanol à partir de dioxyde de carbone et dudit hydrogène obtenu par décomposition de l'eau, séparer le méthanol synthétisé de l'eau produite pendant ladite étape de synthèse du méthanol, stocker et/ou transporter le méthanol ainsi obtenu, et brûler le méthanol qui a été synthétisé au niveau de ladite étape de synthèse du méthanol pour obtenir de l'énergie, dans lequel le dioxyde de carbone produit au niveau de ladite étape de combustion du méthanol est récupéré, et le dioxyde de carbone ainsi récupéré est stocké et/ou transporté pour être utilisé au niveau de ladite étape de synthèse du méthanol.

2. Procédé selon la revendication 1, dans lequel l'eau produite au niveau de ladite étape de combustion du méthanol est récupérée, et l'eau ainsi récupérée est stockée et/ou transportée de manière à être utilisée au niveau de ladite étape de décomposition de l'eau pour la synthèse du méthanol.

3. Procédé selon la revendication 1 ou 2, dans lequel la source d'énergie est basée sur l'énergie solaire, le vent, les vagues, le différentiel de température existant entre les eaux de surface et les eaux profondes, ou sur la puissance géothermique ou nucléaire.

4. Procédé selon l'une quelconque des revendications 1 à 3, dans lequel le dioxyde de carbone produit dans l'étape de combustion du méthanol est récupéré et est réutilisé dans le procédé, le procédé étant conduit sans augmenter la concentration globale en dioxyde de carbone dans l'atmosphère.

5. Procédé pour transporter et/ou stocker de l'énergie en utilisant du méthanol, en tant que milieu destiné au transport et au stockage de l'énergie, lequel procédé comporte les étapes consistant à: décomposer de l'eau en hydrogène et en oxygène en utilisant l'énergie électrique obtenue à partir d'une source d'énergie, synthétiser du méthanol à partir du dioxyde de carbone et dudit hydrogène obtenu par décomposition de l'eau, ainsi que de l'hydrogène résultant d'une étape ultérieure de décomposition du méthanol, séparer le méthanol synthétisé de l'eau produite pendant ladite étape de synthèse du méthanol, stocker et/ou transporter le méthanol ainsi obtenu, décomposer ledit méthanol en monoxyde de carbone et en hydrogène, récupérer de manière séparée le monoxyde de carbone et ledit hydrogène produit par décomposition dudit méthanol, brûler ledit monoxyde de carbone pour obtenir de l'énergie, et récupérer le dioxyde de carbone produit au niveau de ladite étape de combustion du monoxyde de carbone, dans lequel le dioxyde de carbone, récupéré au niveau de ladite étape de récupération du dioxyde de carbone produit par décomposition du méthanol, et ledit hydrogène produit, par décomposition du méthanol, sont utilisés au niveau de ladite étape de synthèse du méthanol.

6. Procédé selon la revendication 5, dans lequel ledit hydrogène produit par ladite décomposition de l'eau ou par ladite décomposition du méthanol est stocké, et ladite synthèse du méthanol est effectuée lorsque la demande en énergie est importante, de sorte que la chaleur engendrée par ladite synthèse du méthanol est utilisée en tant que source d'énergie.

7. Procédé selon la revendication 5, dans lequel ledit monoxyde de carbone produit au niveau de ladite étape de décomposition du méthanol est stocké, et ledit monoxyde de carbone est brûlé lorsque la demande en énergie est importante, de sorte que la chaleur engendrée en brûlant ledit monoxyde de carbone est utilisée en tant que source d'énergie.

8. Procédé selon l'une quelconque des revendications 5 à 7, dans lequel l'eau produite au niveau de ladite étape de combustion du monoxyde de carbone est récupérée, et l'eau ainsi récupérée est stockée et/ou transportée pour être utilisée au niveau de ladite étape de synthèse du méthanol.

9. Procédé selon l'une quelconque des revendications 5 à 8, dans lequel la source d'énergie est une source d'énergie nucléaire.

10. Procédé selon l'une quelconque des revendications 5 à 9, dans lequel le dioxyde de carbone produit au cours de ladite étape de combustion du monoxyde de carbone est récupéré et est réutilisé dans le procédé, le procédé étant ainsi effectué sans augmenter la concentration globale en dioxyde de carbone dans l'atmosphère.
